# EUROPÄISCHE PATENTSCHRIFT

(11) **EP 0 707 166 B1**
(45) Veröffentlichungstag und Bekanntmachung des Hinweises auf die Patenterteilung: **10.05.2000**
(21) Anmeldenummer: 95116045.6
(22) Anmeldetag: 11.10.1995
(51) Int. Cl.: F16J 15/32, F16J 15/56

(54) **Dichtung**
Seal
Joint d'étanchéité

(30) Priorität: 12.10.1994 DE 9416432 U
(43) Veröffentlichungstag der Anmeldung: 17.04.1996
(73) Patentinhaber: GEBRÜDER MÜLLER APPARATEBAU GmbH & Co. KG, D-74653 Ingelfingen 2 (DE)
(72) Erfinder: Müller, Fritz, D-74653 Ingelfingen (DE)
(74) Vertreter: Hering, Hartmut, Dipl.-Ing.

(56) Entgegenhaltungen:
- DE-B- 1 079 404
- GB-A- 2 075 137
- GB-A- 2 156 924
- US-A- 4 717 161

## Beschreibung

Die Erfindung befaßt sich mit einer Dichtung für ein in einem Gehäuse beweglich geführtes Stellglied, bei dem es sich insbesondere um eine Ventilspindel bei einer beliebigen Ventilbauart handeln kann ,nach dem Oberbegriff des Patentanspruchs 1.

Eine Dichtung gemäß Oberbegriff des Anspruches 1 ist aus US-A-4 717 161 bekannt.
Aus GB-A- 2 156 924 und GB-A-2 075 137 sind Dichtungen mit mehreren axial beabstandeten O-ringförmigen Abschnitten bekannt, welche zur Aufbringung einer mechanischen Vorspannung mehrere gesonderte Teile benötigen. Mittel zur Dichtigkeitsüberwachung fehlen aber.

Bei einer Dichtung für eine Ventilspindel hat man bisher axial beabstandet mehrere gesonderte, oder zu einer Einheit zusammengefaßte O-Ringdichtungen in Form eines Dichtungspakets eingesetzt. Zusätzlich waren stirnseitig noch Endringe erforderlich. Die O-Ringe wurden in einen hülsenförmig das Stellglied umgebenden Träger in dort auf entsprechende Weise vorgesehenen nutenförmigen Ausnehmungen eingelegt. Die Herstellung einer üblichen Ventilspindeldichtung und die Montage derselben sind teuer und aufwendig.

Die Erfindung zielt daher darauf ab, eine Dichtung für ein in einem Gehäuse beweglich geführtes Stellglied, insbesondere eine Ventilspindel, bereitzustellen, mit welcher man eine zuverlässigere Abdichtung gegenüber einem Medium und einem Arbeitsraum auf herstellungstechnisch vereinfachte und montagetechnisch günstigere Weise erhält.

Nach der Erfindung wird hierzu eine Dichtung für ein in einem Gehäuse beweglich geführtes Stellglied, insbesondere eine Ventilspindel bereitgestellt, welche im Anspruch 1 angegeben ist.

Bei der erfindungsgemäßen Dichtung, welche insbesondere als Ventilspindeldichtung eingesetzt wird, hat man eine einteilige Auslegung eines aus einem einheitlichen Material bestehenden Dichtungsformkörpers, an welchem als Kombination mehrere axial beabstandete O-ringförmige Dichtungsabschnitte, welche im eingebauten Zustand unter Vorspannung gegen das Stellglied, das heißt die Ventilspindel, anliegen, ausgeformt sind, und bei welchem zugleich auch Lippenringdichtungsabschnitte ausgeformt sind, die zur Mediums- und Arbeitsraumabdichtung dienen. Ein derartiger Dichtungsformkörper mit den dort integral ausgebildeten Dichtungsabschnitten läßt sich auf einfache und kostengünstige Weise herstellen, und dieser Dichtungsformkörper wird dann als kombinierte Ventilspindel-Abdichtung beispielsweise bei einem Ventil eingesetzt. Dieser einteilige bzw. einstückige Dichtungsformkörper gestattet einen vereinfachten Einbau, da nur ein zu handhabendes kombiniertes Dichtungsformkörperteil und nicht mehrere, gesondert zu montierende Einzeldichtungen vorhanden ist. Daher läßt sich nicht nur die Herstellung, sondern auch die Montage nennenswert gegenüber der üblichen Bauformen vereinfachen.

Ferner ist zur mechanischen Vorspannung der Dichtungsabschnitte des Dichtungsformkörpers im eingebauten Zustand dieser von einer zwischen dem Gehäuse und dem Dichtungsformkörper angeordneten Aufnahme umgeben. Diese Aufnahme ist aus einem steiferen Material als der einstückige Dichtungsformkörper ausgebildet, und sie ist zweckmäßigerweise geteilt ausgelegt. Diese Aufnahme, mit der eine mechanische Vorspannung bewirkt wird, wird um den einstückig ausgebildeten Dichtungsformkörper angeordnet und gelegt, und dann wird diese Montageeinheit aus einstückigem Dichtungsformkörper und Aufnahme an der dem Stellglied zugeordneten Stelle gehäusefest festgelegt.

Ferner hat der Dichtungsformkörper nach der Erfindung eine Leckagebohrung zur Dichtigkeitsüberwachung, welche vorzugsweise zwischen zwei O-ringförmigen Dichtungsabschnitten des Dichtungsformkörpers angeordnet ist, und die Wandung des Dichtungsformkörpers durchsetzt. In Fortsetzung dieser Leckagebohrung im Dichtungsformkörper weist die diesen umgebende Aufnahme ebenfalls eine Durchgangsbohrung auf, und mit Hilfe von zugeordneten Einrichtungen läßt sich dann hierdurch die Dichtigkeit der Dichtungsabschnitte an dem Dichtungsformkörper überwachen.

Vorzugsweise ist der Dichtungsformkörper aus einem Elastomer oder einem fluorhaltigen Thermoplast hergestellt.

Zusätzlich kann an wenigstens einer Stirnseite des Dichtungsformkörpers auch ein den Gehäuseinnenraum abdichtender Lippenringdichtungsabschnitt ausgebildet sein. Dieser, den Gehäuseinnenraum abdichtender Lippenringdichtungsabschnitt ist vorzugsweise stirnseitig axial vorspringend ausgebildet.

Der Dichtungsformkörper nach der Erfindung läßt sich bei jeder beliebigen Bauart, insbesondere eines Ventils, einsetzen.

Die Erfindung wird nachstehend an Hand einer bevorzugten Ausführungsform unter Bezugnahme auf die beigefügte Zeichnung näher erläutert. Darin zeigt:
- Fig. 1: eine schematische Schnittansicht eines Schrägsitzventils als ein Anwendungsbeispiel eines Ventils, und
- Fig. 2: eine Einzelteildarstellung eines Dichtungsformkörpers nach der Erfindung in einer Axialschnittansicht.

Obgleich die Erfindung nachstehend an Hand eines Ventils, beispielsweise eines Schrägsitzventils, in Verbindung mit der Abdichtung einer Ventilspindel erläutert wird, kann natürlich die erfindungsgemäße Dichtung auch bei anderen Bauteilen eingesetzt werden, bei denen ein in einem Gehäuse beweglich geführtes Stellglied abzudichten ist.

In den Figuren der Zeichnung sind gleiche oder ähnliche Teile mit denselben Bezugszeichen versehen.

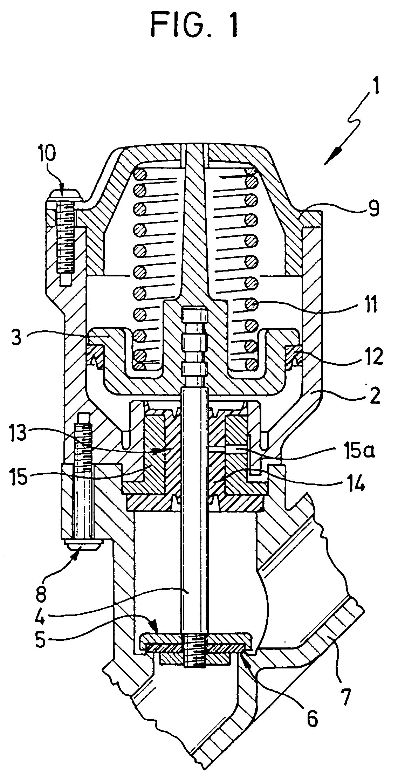

In Figur 1 ist ein insgesamt mit 1 bezeichnetes Ventil schematisch dargestellt, bei dem es sich als Beispiel um ein Schrägsitzventil handelt. Dieses Ventil 1 umfaßt ein Kolbengehäuse 2, in welchem ein Antriebskolben 3 beweglich angeordnet ist, welcher als Stellglied eine Ventilspindel 4 trägt. An ihrem freien Ende trägt die Ventilspindel 4 einen Ventilteller 5, welcher zur Sitzanlage gegen einen Ventilsitz 6 bringbar und von diesem abhebbar ist, welcher beim dargestellten Beispiel in einem Ventilkörper 7 ausgebildet ist. Das Kolbengehäuse 2 ist mit dem Ventilkörper 7 über eine Schraubverbindung 8, zweckmäßigerweise eine Selbstschneidschraubverbindung verbunden.

Das zweckmäßigerweise hohlzylindrisch ausgebildete Kolbengehäuse 2 ist an seiner Oberseite mittels eines Deckels 9 verschlossen, welcher an dem Kolbengehäuse 2 vorzugsweise mittels einer Schraubverbindung 10, zweckmäßigerweise einer Selbstschneidschraubverbindung, befestigt ist. Zwischen der Innenseite des Deckels 9 und dem Antriebskolben 3 wirkt eine den Antriebskolben 3 beaufschlagende Druckfeder 11. Zwischen dem Kolbengehäuse 2 und dem Antriebskolben 3 ist eine Dichtung 12 vorgesehen, welche bei der dargestellten Ausführungsform in bevorzugter Weise als Lippenringdichtung ausgelegt ist.

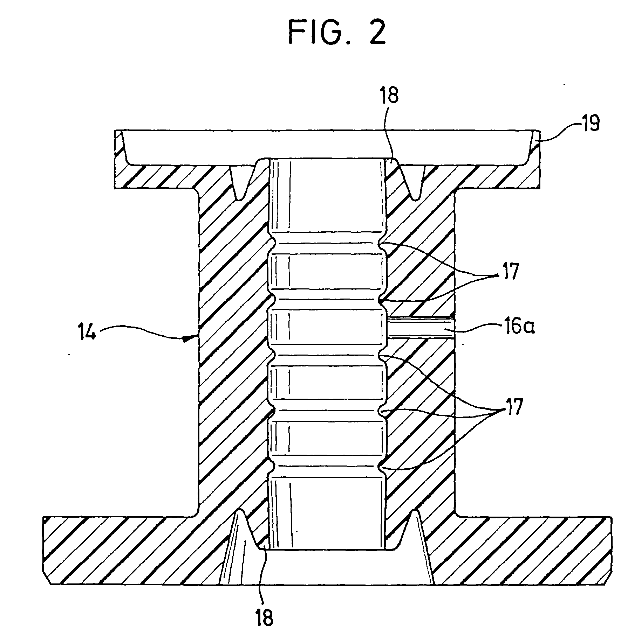

Der Ventilspindel 4 ist eine Dichtung 13 zugeordnet, welche von einem einteiligen, die Ventilspindel 4 hülsenartig umgebenden Dichtungsformkörper 14 gebildet wird, dessen Einzelheiten nachstehend näher in Verbindung mit Figur 2 erläutert werden. Dieser Dichtungsformkörper 14 ist von einer Aufnahme 15 umgeben, welche aus einem starren, steiferen Material als der Dichtungsformkörper 14 ausgebildet ist. Diese Aufnahme 15 ist geteilt und wird um den Dichtungsformkörper 14 angeordnet. Die vormontierte Einheit aus Dichtungsformkörper 14 und Aufnahme 15 wird in eine zugeordnete Bohrung des Kolbengehäuses 2 bei der Montage eingesetzt, und das Kolbengehäuse 2 mit dieser vormontierten Einheit wird dann mit Hilfe der Schraubverbindung 8 fest mit dem Ventilkörper 7 verbunden. Hierbei umgibt die Dichtung 13 die Ventilspindel 4 hülsenförmig. Die Aufnahme 15 bewirkt eine mechanische Vorspannung der an dem Dichtungsformkörper 14 ausgebildeten Dichtungsabschnitte, welche nachstehend im Zusammenhang mit Figur 2 näher erläutert werden.

Wie ferner aus Figur 1 zu ersehen ist, hat sowohl der Dichtungsformkörper 14 als auch die Aufnahme 15 je eine Leckagebohrung 15a bzw. 16a, welche zueinander fluchten und die mit Hilfe von nicht näher gezeigten Einrichtungen eine Dichtigkeitsüberwachung der als Ventilspindeldichtung dienenden Dichtung 13 gestatten.

Bei einer axialen Bewegung des Antriebskolbens 3, gegebenenfalls bewirkt durch einen Betriebsdruck und Steuerdruck wird die Ventilspindel 4 axial in Richtung auf den Ventilsitz 6 am Ventilkörper 7 und von diesem weg bewegt.

In Figur 2 ist der Dichtungsformkörper 14 der Dichtung 13 in Einzelteildarstellung näher gezeigt. Der Dichtungsformkörper 14 ist beispielsweise einteilig aus einem Elastomer oder einem fluorhaltige Thermoplast hergestellt und ist hülsenförmig ausgebildet. An diesem Dichtungsformkörper 14 sind unter Zuordnung zu der in Figur 1 gezeigten Ventilspindel 4 axial im Abstand mehrere O-ringförmig ausgebildete Dichtungsabschnitte 17 ausgeformt. Stirnseitig sind mit 18 bezeichnete Lippenringdichtungsabschnitte ausgeformt, welche ebenfalls mit der in Figur 1 gezeigten Ventilspindel 4 zusammenarbeiten. Zusätzlich ist an dem in Figur 2 oben dargestellten stirnseitigen Ende ein den Gehäuseinnenraum abdichtender Lippenringdichtungsabschnitt 19 ausgebildet. Dieser Lippenringdichtungsabschnitt 19 ist stirnseitig axial vorspringend ausgebildet, und der Dichtungslippenabschnitt weist in Richtung des in Figur 1 gezeigten Antriebskolbens 3.

Die O-ringförmig ausgebildeten Dichtungsabschnitte 17, die stirnseitigen Lippenringdichtungsabschnitte 18 und gegebenenfalls der zusätzliche Lippenringdichtungsabschnitt 19 werden durch die in Figur 1 gezeigte Aufnahme 15 jeweils unter eine mechanischen Vorspannung gesetzt. Die Lippenringdichtungsabschnitte 18 und 19 werden zusätzlich noch durch den Betriebsdruck des Betriebsmittels beispielsweise zum Antreiben des Antriebskolbens 3 oder durch den Mediumdruck des Mediums in dem Ventilkörper 7 beaufschlagt.

Die nach der Erfindung in einem einzigen einheitlichen Dichtungsformkörper 14 integrierten O-ringförmig ausgebildeten Dichtungsabschnitte 17 und die Lippenringdichtungsabschnitte 18 und 19 stellen eine kombinierte Abdichtung für die in Figur 1 als Beispiel eines Stellglieds gezeigte Ventilspindel 4 bereit. In dem Dichtungsformkörper 14 sind mehrere Abdichtungen einerseits gegenüber der Ventilspindel 4 und andererseits gegenüber dem Gehäuse bzw. dem Kolbengehäuse 2 vereint. Zusätzlich erfolgt eine Abdichtung zwischen Mediumsraum und Arbeitsraum nach außen über die im Dichtungsformkörper 14 integrierten Dichtungsabschnitte. Die Anpreßkraft an den Lippenringdichtungsabschnitten 18, 19 wird ferner auch von den Drücken bestimmt, welche von außen auf den Dichtungsformkörper 14 über den Mediumsraum und Arbeitsraum her einwirken.

Obgleich die nach der Erfindung wesentliche Dichtung 13 im Zusammenhang mit einer Ventilspindel 4 eines Ventils 1 erläutert worden ist, läßt sie sich natürlich auch in Abweichung von der dargestellten Ausführungsform im Zusammenhang mit anderen Anwendungsbeispielen einsetzen, wenn eine kombinierte Dichtung eines linear beweglichen Stellglieds erforderlich ist. Daher ist die Erfindung nicht auf die voranstehend im Zusammenhang mit der bevorzugten Ausführungsform erläuterten Einzelheiten beschränkt. Vielmehr sind zahlreiche Abänderungen und Modifikationen möglich, die der Fachmann im Bedarfsfall in Abhängigkeit von den jeweils spezifischen Anwendungsformen vornehmen wird.

## Patentansprüche

1. Dichtung für ein in einem Gehäuse (2) beweglich geführtes Stellglied, insbesondere eine Ventilspindel (4), wobei die Dichtung von einem einstückigen, hülsenförmig das Stellglied (4) umgebenden Dichtungsformkörper (14) gebildet wird, an welchem stirnseitig Lippenring-Dichtungsabschnitte (18) zur Mediums- und Arbeitsraumdichtung ausgebildet sind, **dadurch gekennzeichnet**, daß am Dichtungsformkörper (14) mehrere axial beabstandete O-ringförmige Dichtungsabschnitte (17) als Ringdichtungen gegenüber den beweglich geführten Stellglied (4) ausgeformt sind, zur mechanischen Vorspannung der Dichtungsabschnitte (17, 18) des Dichtungsformkörpers (14) im eingebauten Zustand dieser von einer zwischen dem Gehäuse (2) und dem Dichtungsformkörper (14) angeordneten Aufnahme (15) aus steiferem Material als der Dichtungsformkörper (14) umgeben ist, und daß eine Leckagebohrung (16a) zur Dichtigkeitsüberwachung im Dichtungsformkörper (14) und eine Leckagebohrung (15a) hierzu fluchtend in der Aufnahme (15) vorgesehen sind.

2. Dichtung nach Anspruch 1, **dadurch gekennzeichnet**, daß die Leckagebohrung (16a) zwischen zwei O-ringförmigen Dichtungsabschnitten (17) angeordnet ist.

3. Dichtung nach Anspruch 1 oder 2, **dadurch gekennzeichnet**, daß der Dichtungsformkörper (14) aus einem Elastomer hergestellt ist.

4. Dichtung nach Anspruch 1 oder 2, **dadurch gekennzeichnet**, daß der Dichtungsförmkörper (14) aus einem fluorhaltigen Thermoplast hergestellt ist.

5. Dichtung nach einem der vorangehenden Ansprüche, **dadurch gekennzeichnet**, daß an wenigstens einer Stirnseite des Dichtungsformkörpers (14) zusätzlich zu dem mit dem Stellglied (4) zusammenarbeitenden Lippenring-Dichtungsabschnitt (18) ein weiterer, den Gehäuseinnenraum abdichtender Lippenring-Dichtungsabschnitt (19) ausgebildet ist.

6. Dichtung nach Anspruch 5, **dadurch gekennzeichnet**, daß der weitere, den Gehäuseinnenraum abdichtende Lippenring-Dichtungsabschnitt (19) stirnseitig axial vorspringend ausgebildet ist.

## Claims

1. Seal for an adjusting element, in particular a valve spindle (4), guided movably in a housing (2), wherein the seal is formed by an integral sealing moulding (14) surrounding the adjusting element (4) like a sleeve, on which sealing moulding (14) lip ring sealing sections (18) are formed on the end-face side for sealing of the medium and working space, characterised in that several axially spaced O-ring-shaped sealing sections (17) as annular seals with respect to the movably guided adjusting element (4) are formed on the sealing moulding (14), for mechanical biasing of the sealing sections (17, 18) of the sealing moulding (14) in the mounted state, the latter is surrounded by a receiver (15) arranged between the housing (2) and the sealing moulding (14) and made from stiffer material than the sealing moulding (14), and in that a leakage bore (16a) for monitoring tightness in the sealing moulding (14) and a leakage bore (15a) aligned thereto are provided in the receiver (15).

2. Seal according to claim 1, characterised in that the leakage bore (16a) is arranged between two O-ring-shaped sealing sections (17).

3. Seal according to claim 1 or 2, characterised in that the sealing moulding (14) is produced from an elastomer.

4. Seal according to claim 1 or 2, characterised in that the sealing moulding (14) is produced from a fluorine-containing thermoplastic.

5. Seal according to one of the preceding claims, characterised in that a further lip ring sealing section (19) sealing the housing interior is formed on at least one end-face of the sealing moulding (14) in addition to the lip ring sealing section (18) cooperating with the adjusting element (4).

6. Seal according to claim 5, characterised in that the further lip ring sealing section (19) sealing the housing interior is designed to project axially on the end-face side.

## Revendications

1. Joint d'étanchéité pour un élément de réglage, en particulier une tige de soupape (4), guidé et mobile dans un boîtier (2), le joint d'étanchéité étant formé par un corps d'étanchéité moulé (14), d'une seule pièce, entourant, comme une douille, la tige de réglage (4), sur lequel sont formées, en bout, pour l'étanchéité de l'espace fluide-travail, des sections d'étanchéité du type à bague à lèvre (18), **caractérisé en ce** que, sur le corps d'étanchéité moulé (14), sont prévues plusieurs sections d'étanchéité (17), sous forme d'anneaux toriques, réparties séparées sur l'axe, comme étanchéité annulaire, en face de la tige de réglage (4), guidée et mobile, pour la précontrainte mécanique des sections d'étanchéité (17, 18) du corps d'étanchéité moulé (14), à l'état monté, celui-ci est entouré par un logement (15), entre le boîtier (2) et le corps d'étanchéité moulé (14), en matériau plus rigide que le corps d'étanchéité moulé (14), et en ce que sont prévus un orifice de fuite (16a) pour le contrôle de l'étanchéité dans le corps d'étanchéité moulé (14) et un orifice de fuite (15a), aligné avec ce dernier, dans le logement (15).

2. Joint d'étanchéité suivant la revendication 1, **caractérisé en ce** que l'orifice de fuite (16a) est prévu entre deux sections d'étanchéité en anneau torique (17).

3. Joint d'étanchéité suivant la revendication 1 ou 2, **caractérisé en ce** que le corps d'étanchéité moulé (14) est fabriqué en élastomère.

4. Joint d'étanchéité suivant la revendication 1 ou 2, **caractérisé en ce** que le corps d'étanchéité moulé (14) est fabriqué en matière thermoplastique contenant du fluor.

5. Joint d'étanchéité suivant l'une des revendications précédentes, **caractérisé en ce** que, au moins d'un côté frontal du corps d'étanchéité moulé (14), est prévue, outre la section d'étanchéité à bague à lèvre (18) coopérant avec l'élément de réglage (4), une autre section d'étanchéité à bague à lèvre (19) qui fait l'étanchéité de la chambre intérieure du boîtier.

6. Joint d'étanchéité suivant la revendication 5, **caractérisé en ce** que l'autre section d'étanchéité à bague à lèvre (19), qui fait l'étanchéité de la chambre intérieure du boîtier, est créée avec précontrainte au bout dans le sens axial.
